# EUROPEAN PATENT APPLICATION

(11) **EP 3 809 587 A1**
(43) Date of publication of application: **21.04.2021**
(21) Application number: 19203432.0
(22) Date of filing: 15.10.2019
(51) Int. Cl.: H02P 29/64, H02P 21/14

(54) **A METHOD FOR ESTIMATING A TEMPERATURE IN AN ELECTRIC MOTOR, AND A METHOD FOR CONTROLLING THE ELECTRIC MOTOR**

(71) Applicant: KNORR-BREMSE Systeme für Nutzfahrzeuge GmbH, 80809 München (DE)
(72) Inventor: BONTINCK, Zeger, 75417 Mühlacker (DE); BECKER, Kai-Sven, 71701 Schwieberdingen (DE); TERRO, Ali, 81375 München (DE); TIHANYI, Viktor, 1032 Budapest (HU)
(74) Representative: Prüfer & Partner mbB Patentanwälte · Rechtsanwälte

(57) **Abstract**

A method for estimating a temperature in an electric motor is provided. The method comprises the step: estimating a temperature in a coil of the electric motor based on previously estimated electric properties of the motor by a parameter estimation algorithm.

## Description

The invention relates to a method for estimating a temperature in an electric motor, and a method for controlling the electric motor, in particular, to a method for estimating a temperature in an electric motor, and a method for controlling the electric motor in applications having high requirements with respect to reliability.

A controller of an electric motor determines input voltages *U_{d}* and *U_{q}* necessary for operating the electric motor. From the determined input voltages *U_{d}* and *U_{q},* currents *I_{d}* and *I_{q}* result which are transformed into three phase currents which are applied accordingly to the coils of the electric motor. A robust control performance determining these parameters during operation so that correct currents are fed to the coils is necessary. The control of the electric motors is usually based on inputs received by sensors. One of the sensors detects a position of a rotor, e.g., a torque-angle-sensor, and another sensor measures the currents of the phases of the motor which are transformed into the currents *I_{d}* and *I_{q}*.

When using an electric motor, knowledge of the electric properties of the electric motor, such as a resistances and inductivities of coils, is necessary in order to control a machine using this electric motor properly. However, as the case may be, the electric properties are not known.

Further, during operation of a motor upon stressing the electric motor, the fundamental parameters of the electric motor, such as the resistances and the inductivities of the coils, may change during usage. The change is caused, e.g., by changing conditions in the electric motor. In the case of coils of the electric motor, an increasing temperature in the coils causes an increased resistance of the coils. Furthermore, wear of the motor or of the machine over its lifespan causes the change of conditions of the machine. However, in particular, the resistance and the inductivities of the coils are to be accurately known since they are key parameters for controlling the machine efficiently.

In order to improve control of the electric motor, at standstill of the electric motor, the resistance, in particular, of the stator, and the inductivities *L_{d}* and L*_{q}* can be determined using a parameter estimation algorithm as, e.g., an "Adaline Neural Network" algorithm. Then, during operation of the electric motor, this information is used to estimate a magnetic flux linkage of the permanent magnets by a parameter estimation algorithm as, e.g., an Extended-Kalman-Filter (EKF)". By means of this algorithm, the resistance and the inductivities can be re-estimated during operation of the electric motor in order to improve the control of the electric motor.

However, the applied currents cause heating of the conductors and of the coils and, thus, they change the resistance. Furthermore, in order to avoid overheating, a temperature sensor is used to track the temperature development in the coils which, if necessary, can be used for forcing on operational step. Due to the application of the temperature sensors, at worst for each coil, the electric motor becomes bulky and the manufacturing costs increase.

Therefore, the object underlying the invention is to provide a control for an electric motor which enables a determination of unknown electrical properties and which improves the motor concerning installation space and manufacturing costs.

The object is achieved by methods according to claim 1 and claim 5 and a computer program product according to claim 6. Advantageous further developments of the invention are included in the dependent claims.

According to an aspect of the invention, a method for estimating a temperature in an electric motor comprising the step: estimating a temperature in a coil of the electric motor based on previously estimated electric properties of the motor by a parameter estimation algorithm.

By an estimate of the temperature in the coil, a provision of a temperature sensor, at worst for each coil, is not necessary. Therefore, since the control is anyway provided, an installation space, a quantity of components and manufacturing costs can be decreased.

In an advantageous implementation of the method, the parameter estimation algorithm is based on a model reference adaptive control model.

The model reference adaptive control model is usually already used for estimating further parameters of the motor so that only an adaption of the model is necessary without providing an additional model.

In a further advantageous implementation of the method, the previously estimated electric properties comprise a resistance and at least one of a permanent magnet flux linkage and inductivities of the coil.

Except from the permanent magnet flux linkage or the inductivities of the coil, the resistance of the coil itself or of the coil including its supply line can be estimated. By the estimation based on these electric properties, the values essential for an effective control of the motor can be determined.

In a further advantageous implementation of the method, it further comprises the steps: estimating the resistance and the inductivities of the coil at standstill of the motor, and estimating the permanent magnet flux linkage and re-estimating and tracking variations of the permanent magnet flux linkage, the resistance, and the inductivities of the coil during operation of the motor.

When estimating the electric properties during standstill, appropriate start values for the estimate are available. Due to the estimate, re-estimate, and tracking variations during operation, appropriate current parameters can be used for the control of the electric motor and for the subsequent estimates even though they are initially not known.

According to a further aspect of the invention, a method for controlling the electric motor comprises the steps: estimating the temperature of the coil of the electric motor during operation, and determining a current to be supplied to the electric motor based on a required performance, on the estimated variable electric properties, and on the estimated temperature.

By a control of the electric motor according to this method, the electric motor can be controlled in a reliable manner without providing a temperature sensor which saves installation space and manufacturing costs.

According to a further aspect of the invention, a computer program product comprising instructions which, when the program is executed by a computer or a computing unit, cause the computer or the computing unit to carry out the method is provided.

Below, the invention is elucidated by means of embodiments referring to the drawings.

In particular,
- Fig. 1: shows a block diagram depicting a method according to the invention;
- Fig. 2: shows a diagram illustrating an efficacy of the method; and
- Fig. 3: shows a further diagram illustrating an efficacy of the method.

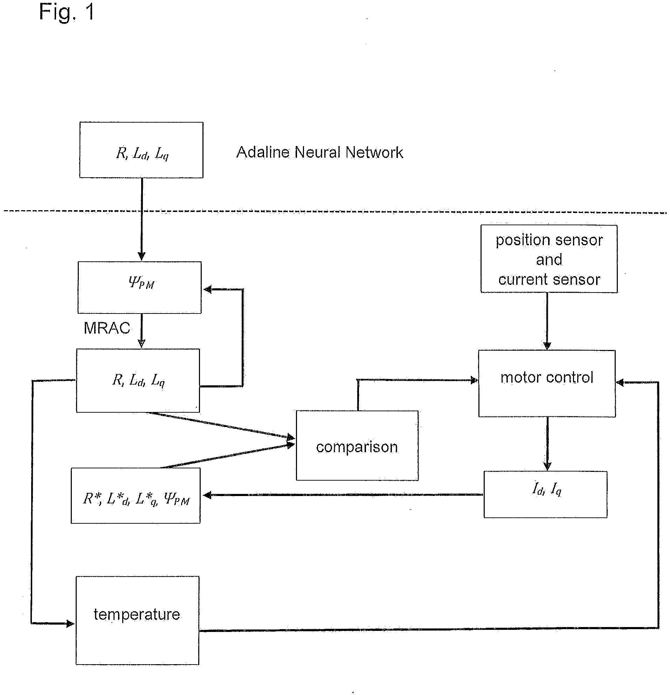

**Fig. 1** shows a block diagram depicting a method according to the invention.

The block diagram is partitioned in an upper part above a dotted line and a lower part below the dotted line.

In the upper part of the diagram, a situation during standstill of the electric motor is shown. A resistance *R* of a coil or of a coil including its supply line, an inductivity *L_{d}* and an inductivity *L_{q}* are estimated by means of a parameter estimation algorithm comprising an Adaline Neural Network model. Alternatively, other electrical properties or, further alternatively, no electrical properties are estimated during standstill and predetermined start values are used.

In the lower part, a control of an electric motor in operation is shown.

Based on the electric properties previously estimated during standstill of the electric motor, a permanent magnet flux linkage *Ψ_{PM}* is estimated. Moreover, the resistance *R,* the inductivity *L_{d},* and the inductivity *L_{q}* are re-estimated by means of a parameter estimation algorithm comprising a Model-Reference-Adaptive-Control (MRAC) model and, in turn, the permanent magnet flux linkage *Ψ_{PM}* is re-estimated. Alternatively, another parameter estimation algorithm, as, e.g., an Extended-Kalman-Filter (EKF), is used.

Furthermore, variations of the permanent magnet flux linkage *Ψ_{PM}*, the resistance Rof the coil, and the inductivities *L_{d}*, *L_{q}* of the coil are tracked during operation of the motor by a control algorithm.

By the parameter estimation algorithm estimating and re-estimating the resistance *R*, the inductivity *L_{d}* and the inductivity *L_{q}*, a temperature of the coil can be estimated.

For controlling the electric motor, a motor control processes information of a position sensor and of a current sensor and, also, information about the estimated temperature of the coil. Based on this information and based on a required performance, the motor control determines currents *I_{d}* and *I_{q}.*

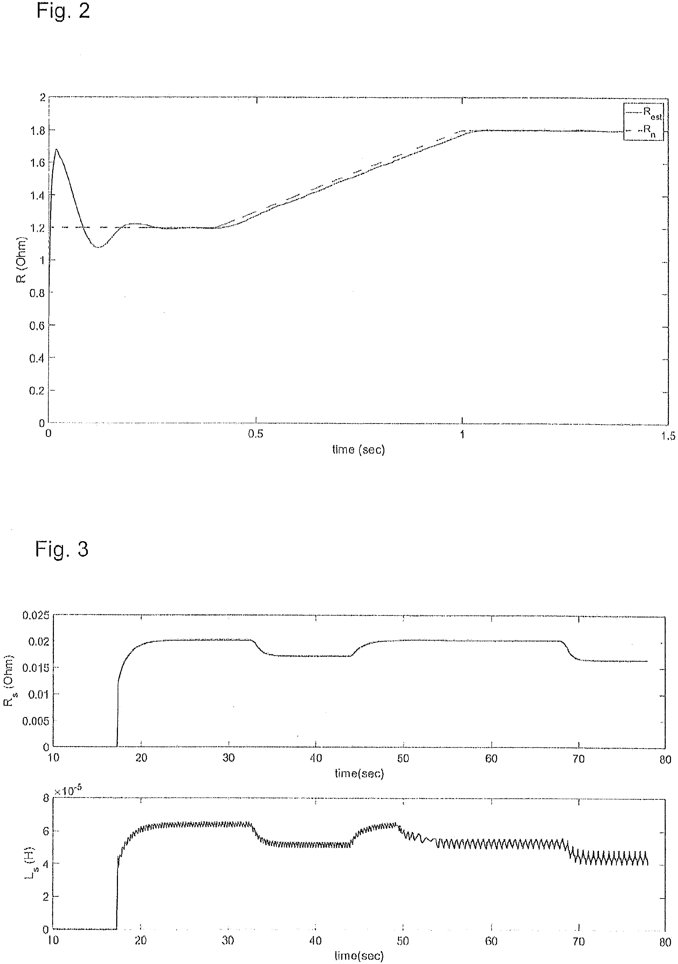

**Fig. 2** shows a diagram illustrating an efficacy of the method. On the abscissa of the diagram, a time is indicated, and on an ordinate, a resistance *R* is indicated.

Initially, the resistance is set to 1.2 Ω. During operation, as shown by a dotted line, the resistance *Rₙ* increases due to Joule heating by the electric current until it reaches 1.75 Ω.

As to be seen from the diagram, except from an overshoot at the beginning, the estimated resistance *Rₑₛₜ* nearly corresponds to the resistance *Rₙ.*

**Fig. 3** shows further diagrams illustrating an efficacy of the method. On the abscissa of the diagrams, a time is indicated, and on the ordinate, in the upper diagram, resistance *R* is indicated, and, in the lower diagram, the inductivity *Lₛ* is indicated.

As to be seen from the diagrams, the course of the inductivity *Lₛ* almost corresponds to the course of the resistance *R*. Therefore, the algorithm according to the method applied to a real machine with unknown electrical properties leads to reasonable values for the resistance *R* and the inductivity *Lₛ.*

The invention has been described in conjunction with various embodiments herein. However, other variations to the disclosed embodiments can be understood and effected by those skilled in the art in practicing the claimed invention, from a study of the drawings, the disclosure and the appended claims. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- *L_{d}*, *L_{q}*: inductivity
- *I_{d}*, *I_{q}*: current
- *Ψ_{PM}*: permanent magnet flux linkage
- *R*: resistance

- MRAC: Model-Reference-Adaptive-Control model

## Claims

1. A method for estimating a temperature in an electric motor, the method comprising the step:
estimating a temperature in a coil of the electric motor based on previously estimated electric properties of the motor by a parameter estimation algorithm.

2. The method of claim 1, wherein
the parameter estimation algorithm is based on a model reference adaptive control (MRAC) model.

3. The method of claim 1 or 2, wherein,
the previously estimated electric properties comprise a resistance (R) and at least one of a permanent magnet flux linkage (*Ψ_{PM}*) and inductivities (*L_{d}*, *L_{q}*) of the coil.

4. The method of anyone of claims 1 to 3, further comprising the steps:
estimating the resistance *(R*) and the inductivities (*L_{d}*, *L_{q}*) of the coil at standstill of the motor, and
estimating the permanent magnet flux linkage (*Ψ_{PM}*) and re-estimating and tracking variations of the permanent magnet flux linkage (*Ψ_{PM}*), the resistance (*R*), and the inductivities (*L_{d}*, *L_{q}*) of the coil during operation of the motor.

5. A method for controlling an electric motor, the method comprising the steps:
estimating a temperature of a coil of the electric motor during operation according to the method of anyone of claims 1 to 4; and
determining current (*I_{d}*, *I_{q}*) to be supplied to the electric motor based on a required performance, on the estimated variable electric properties and on the estimated temperature of the coil.

6. A computer program product comprising instructions which, when the program is executed by a computer, cause the computer to carry out the steps of the method of anyone of claims 1 to 5.
